Europäisches Patentamt

European Patent Office

Office européen des brevets

(19)

(11) **EP 0 815 465 B1**

(12) **FASCICULE DE BREVET EUROPEEN**

(45) Date de publication et mention
de la délivrance du brevet:
**11.07.2001 Bulletin 2001/28**

(51) Int Cl.⁷: **G01S 5/00**

(86) Numéro de dépôt international:
**PCT/FR96/00423**

(21) Numéro de dépôt: **96908163.7**

(22) Date de dépôt: **21.03.1996**

(87) Numéro de publication internationale:
**WO 96/29611 (26.09.1996 Gazette 1996/43)**

(54) **PROCEDE DE LOCALISATION DE MOBILES**

VERFAHREN ZUR ORTUNG VON MOBILSTATIONEN

METHOD FOR LOCATING MOBILE STATIONS

(84) Etats contractants désignés:
**AT BE CH DE DK ES FI FR GB GR IE IT LI LU MC
NL PT SE**

(30) Priorité: **22.03.1995 FR 9503335**

(43) Date de publication de la demande:
**07.01.1998 Bulletin 1998/02**

(73) Titulaire: **CENTRE NATIONAL D'ETUDES
SPATIALES
F-75039 Paris Cedex 01 (FR)**

(72) Inventeur: **LESTHIEVENT, Guy
31120 Protet-sur-Garonne (FR)**

(74) Mandataire: **Signore, Robert et al
c/o BREVATOME
3, rue du Docteur Lanceraux
75008 Paris (FR)**

(56) Documents cités:
**WO-A-89/04002          WO-A-90/13186
WO-A-92/21181**

## Description

### Domaine technique

La présente invention a pour objet un procédé de localisation de mobiles. Elle trouve une application dans la gestion de parcs importants de mobiles : automobiles, bâteaux de plaisance, navires, conteneurs, wagons de chemins de fer, camions, avions, etc...

L'invention trouve une application particulière dans le système TAOS proposé par le Centre National d'Etudes Spatiales. Ce système utilise plusieurs satellites répartis sur des orbites basses circulaires à des altitudes inférieures à 1500 km et inclinées de 50 à 60°. A bord de chaque satellite se trouve embarqué un répéteur transparent. Les bandes de fréquences utilisées sont les bandes UHF/VHF : dans la liaison Terre-satellite, on utilise la bande 148-150,05 MHz et dans la liaison satellite-Terre la bande 137-138 MHz et 400,15-401 MHz. Les messages sont transmis par paquets.

### Etat de la technique

On connaît un procédé de localisation bidirectionnel de mobiles qui consiste à moduler une porteuse à l'aide de divers signaux sinusoïdaux appelés "tons". Le mobile répète ces tons de manière cohérente. En mesurant la phase des tons reçus dans la station, après transit dans le mobile à localiser, par rapport à la phase dans la station émettrice, on peut déterminer la distance entre la station et le mobile. La porteuse peut avoir, par exemple, une fréquence située dans la bande 148-150 MHz et les tons avoir une fréquence répartie entre 20 kHz pour le ton à plus haute fréquence (dit ton majeur) et 10 Hz pour le ton de plus basse fréquence (dit ton mineur).

Il existe une norme européenne pour cette technique. Cette norme a été établie par l'Agence Spatiale Européenne. Elle est décrite dans le document "Ranging Standard" édité par Data Handing and Signal Processing Division European Space Research and Technology Centre Noordwijk, Pays-Bas.

Cette technique permet non seulement de déterminer les distances mais également les variations de distance et cela à partir de mesures d'effet DOPPLER. Pour cela, on mesure les décalages en fréquence entre les différents signaux émis et reçus.

Cette technique présente l'avantage de conduire à un terminal très simple puisqu'il travaille à basse fréquence (les tons n'excède pas, généralement, 20 kHz). Elle convient bien lorsqu'il s'agit de localiser un seul mobile ou un petit nombre de mobiles. Mais elle devient vite inexploitable s'il existe un grand nombre d'utilisateurs, car le canal de fréquences offert se révèle insuffisant pour transmettre tous les signaux requis.

Une autre technique de radiolocalisation est connue qui permet de remédier à cet inconvénient. Cette technique utilise l'étalement de spectre et met en oeuvre des codes pseudo-aléatoires (en abrégé, par la suite, "PN" pour "Pseudo-Noise"). Un code pseudo-aléatoire est une séquence périodique d'un nombre impair de bits ou "bribes". L'étalement de spectre consiste à moduler le signal utile par un tel code pseudo-aléatoire, ce dernier ayant un débit binaire élevé par rapport à celui des données, et à moduler ensuite une porteuse par le signal composite obtenu. La mesure de distance des mobiles peut s'effectuer à l'aide de tels codes PN en datant les instants d'émission et de réception d'un événement particulier du code par rapport à l'horloge d'un récepteur de signaux à spectre étalé. Cet événement particulier est le début ou la fin d'une bribe spécifique du code.

Pour cette technique d'étalement de spectre à l'aide de codes pseudo-aléatoires en liaison avec la radio-localisation, on pourra se reporter à l'ouvrage collectif intitulé "Techniques et technologies des véhicules spatiaux", Tome 1, Cépaduès-Editions, (1994) et spécialement au Module 6 "Localisation spatiale" par Jean-Luc ISSLER, pages 561-634.

Cette technologie est utilisée notamment sous la forme unidirectionnelle dans le système dit "Global Positioning System" ou GPS en abrégé.

Si cette technique permet un accès multiple au système de localisation et, par conséquent, convient bien dans le cas d'un grand nombre d'utilisateurs, en revanche, elle présente l'inconvénient de conduire à une certaine complexité du terminal placé dans chaque module. Il faut, en effet, que ce terminal soit capable de recevoir et traiter les signaux à spectre étalé, ce qui suppose des moyens de désétalement travaillant à fréquence élevée.

Les documents WO-A-90/13186 et WO-A-92/21181 décrivent par ailleurs des systèmes de communication et de navigation utilisant une station au sol et deux satellites. La station au sol émet un signal périodique à destination des deux satellites et ceux-ci le renvoient vers le mobile. Celui-ci reçoit donc deux signaux périodiques décalés l'un par rapport à l'autre d'une durée qui tient à ce que les distances du mobile aux satellites ne sont pas les mêmes. Par ailleurs, la station au sol envoie à travers un seul des deux satellites un signal d'horloge de référence vers le mobile et celui-ci renvoie, à travers ledit satellite, ce signal d'horloge de sorte que la station fixe peut en déduire un temps d'aller-retour donc une distance.

Le but de l'invention est de simplifier ces systèmes en n'utilisant qu'un seul satellite au lieu de deux.

**Exposé de l'invention**

Le procédé de l'invention peut être qualifié de mixte en ce sens qu'il emprunte pour une part à la technique de localisation fondée sur la mesure du déphasage de tons et pour une autre part à la technique d'étalement de spectre par code pseudo-aléatoire avec datation. Empruntant à la première, il permet de préserver la simplicité des équipements embarqués à bord des mobiles (la mesure de phase s'effectue à basse fréquence) et évite donc le recours à dès terminaux complexes. Empruntant à la seconde, il permet l'accès au service à un grand nombre d'utilisateurs.

A cette fin, le procédé de l'invention comprend, de manière schématique, une liaison bidirectionnelle mixte en ce sens qu'elle est constituée d'une liaison aller, qui est du type à porteuse modulée par au moins un ton et d'une liaison retour, qui est du type à étalement de spectre par code pseudo-aléatoire. Le terminal embarqué dans le mobile travaille donc en réception par mesure de déphasage du ou des tons, et en émission par étalement de spectre. La station travaille en émission par porteuse modulée par au moins un ton et en réception par désétalement et datation. La complexité liée à la technique d'étalement de spectre est donc reportée dans la station.

De façon plus précise, l'invention a pour objet un procédé de localisation de mobiles, dans lequel on établit une liaison radioélectrique aller-retour entre une station au sol et un mobile à localiser équipé d'un terminal, à travers un satellite artificiel, et on localise le mobile à partir des caractéristiques comparées des signaux radioélectriques de la liaison aller-retour,

ce procédé étant caractérisé par le fait qu'on utilise un seul satellite et qu'il comprend les opérations suivantes :

A) dans la liaison aller :

- depuis la station au sol (10), on émet, à un instant ($t_1$) compté par rapport à un instant de référence ($t_0$) propre à la station, un signal aller (20) constitué par une porteuse ayant une fréquence déterminée ($F_1$) modulée par deux signaux sinusoïdaux appelés "tons", chaque ton ayant une fréquence déterminée $f_M$ et $f_m$ reliées par $f_M = \frac{a}{b} f_m$ où a et b sont des entiers, chaque ton ayant une phase, les phases instantanées des deux tons étant nulles à l'instant de référence ($t_0$) propre à la station,
- on reçoit le signal aller (20) dans le satellite (12) et l'on réémet un signal aller (22) avec un certain retard lié au temps de transit ($t_{sa}$) dans le satellite (12),
- on reçoit le signal aller (22) réémis par le satellite (12) dans le terminal (16) du mobile (14) à localiser et on mesure la phase ($mt_i$) des deux tons reçus à un instant particulier ($t_2$),

B) dans la liaison retour :

- on forme un signal retour dans le terminal (16) du mobile (14) en modulant une porteuse ayant une certaine fréquence ($F_3$) par l'information correspondant aux résultats de la mesure de phase des deux tons ($mt_i$), on effectue une opération d'étalement de spectre de cette porteuse modulée par un code d'étalement lié à un instant particulier ($t_3$) décalé de l'instant de mesure ($t_2$) d'une quantité ($\delta t$) connue,
- on émet, depuis le terminal (16) du mobile (14), un signal retour (24) à spectre étalé à cet instant particulier ($t_3$),
- on reçoit ce signal retour (24) dans le satellite (12) et on réémet un signal retour (26) avec un certain retard lié au temps de transit ($t_{sr}$) dans le satellite,
- on reçoit dans la station (10) le signal retour (26) réémis par le satellite (12), on désétale le spectre du signal reçu puis on démodule ce signal pour restituer l'information relative à la mesure ($mt_i$) de différence de phase,
- on date l'instant de réception ($t_4$) de ces mesures ($mt_i$) par intercorrélation entre le code d'étalement reçu et un code identique attendu,
- à partir des mesures de phases ($mt_i$) de l'instant de réception des mesures ($t_4$), du décalage entre l'instant de mesure et l'instant d'émission par le terminal, des temps de transit dans le satellite ($\delta t$, $t_{sr}$, $t_{sa}$), de la distance ($D_{1r}$) station-satellite à l'instant de réception ($t_4$), de la distance ($D_{1a}$) station-satellite à l'instant d'émission ($t_1$) et des fréquences $F_M$ et $f_m$, on déduit la somme des distances des trajets aller et retour ($D_{2a} + D_{2r}$) entre le satellite et le mobile.

L'invention a également pour objet un procédé de localisation de mobiles, dans lequel on établit une liaison radioélectrique aller-retour entre une station au sol et un mobile à localiser équipé d'un terminal, à travers un satellite artificiel, et on localise le mobile à partir des caractéristiques comparées des signaux radioélectriques de la liaison aller-retour, ce procédé étant caractérisé par le fait qu'on utilise un seul satellite et qu'il comprend les opérations suivantes :

A) dans la liaison aller :

- depuis la station au sol (10), on émet, à un instant ($t_1$) compté par rapport à un instant de référence ($t_0$) propre à la station, un signal aller (20) constitué par une porteuse ayant une fréquence déterminée ($F_1$) modulée par un signal sinusoïdal appelé "ton", cette liaison aller comprenant une structure tramée de symboles ou de bits, ledit ton ayant une fréquence déterminée ($f_M$) multiple du rythme symbole ou bit de la structure tramée et une phase, la phase instantanée du ton étant nulle à l'instant de référence ($t_0$) propre à la station, cet instant ($t_0$) étant pris au début de la trame,
- on reçoit le signal aller (20) dans le satellite (12) et l'on réémet un signal aller (22) avec un certain retard lié au temps de transit ($t_{sa}$) dans le satellite (12),
- on reçoit le signal aller (22) réémis par le satellite (12) dans le terminal (16) du mobile (14) à localiser et on mesure la phase ($mt_i$) du ou des ton(s) reçus à un instant particulier ($t_2$),

B) dans la liaison retour :

- on forme un signal retour dans le terminal (16) du mobile (14) en modulant une porteuse ayant une certaine fréquence ($F_3$) par l'information correspondant aux résultats de la mesure de phase du ou des ton(s)($mt_i$), on effectue une opération d'étalement de spectre de cette porteuse modulée par un code d'étalement lié à un instant particulier ($t_3$) décalé de l'instant de mesure ($t_2$) d'une quantité ($\delta t$) connue,
- on émet, depuis le terminal (16) du mobile (14), un signal retour (24) à spectre étalé à cet instant particulier ($t_3$),
- on reçoit ce signal retour (24) dans le satellite (12) et on réémet un signal retour (26) avec un certain retard lié au temps de transit ($t_{sr}$) dans le satellite,
- on reçoit dans la station (10) le signal retour (26) réémis par le satellite (12), on désétale le spectre du signal reçu puis on démodule ce signal pour restituer l'information relative à la mesure ($mt_i$) de différence de phase,
- on date l'instant de réception ($t_4$) de ces mesures ($mt_i$) par intercorrélation entre le code d'étalement reçu et un code identique attendu,
- à partir des mesures de phases ($mt_i$) de l'instant de réception des mesures ($t_4$), du décalage entre l'instant de mesure d'émission et l'instant par le terminal, des temps de transit dans le satellite ($\delta t$, $t_{sr}$, $t_{sa}$), de la distance ($D_{1r}$) station-satellite à l'instant de réception ($t_4$), de la distance ($D_{1a}$) station-satellite à l'instant d'émission ($t_1$), on déduit la somme des distances des trajets aller et retour ($D_{2a}+D_{2r}$) entre le satellite et le mobile.

A cette mesure de distance peut s'ajouter une mesure DOPPLER classique. Dans ce cas, le terminal asservit sa fréquence d'émission sur la fréquence de la liaison aller qu'il reçoit. La station peut alors combiner le résultat des mesures de distance et celui de la mesure de l'effet DOPPLER, ce qui permet de minimiser les messages à émettre depuis le terminal ou de lever certaines ambiguïtés liées à la mesure du déphasage des tons, comme on le comprendra mieux par la suite.

**Brève description des dessins**

- la figure 1 décrit l'organisation générale d'un système de localisation de mobile à l'aide de stations au sol et de satellites ;
- la figure 2 est un diagramme temporel montrant les instants d'émission et de réception de divers signaux.

**Description de modes particuliers de réalisation**

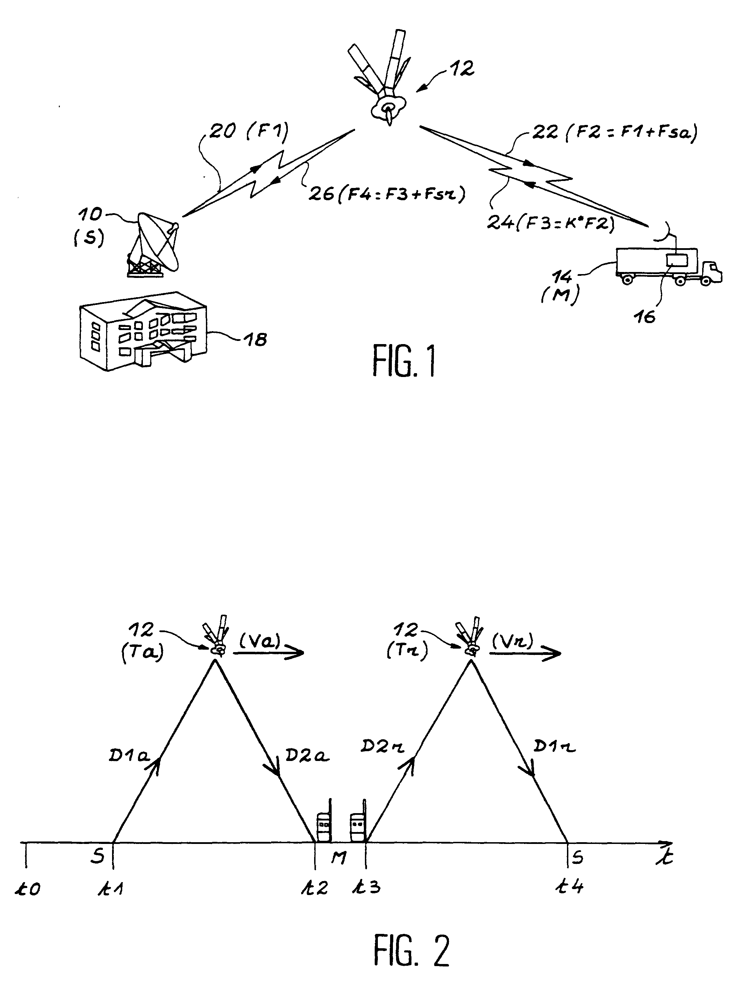

On voit, sur la figure 1, un système de localisation de mobiles comprenant des stations de connexion 10 (une seule est représentée), un satellite 12, des mobiles 14 (un seul est représenté) équipés chacun d'un terminal 16. Les stations 10 sont reliées à un centre d'exploitation 18.

Un signal aller montant 20 est émis par la station 10, à une fréquence $F_{1e}$. Un signal aller descendant 22 est réémis par le satellite à une fréquence $F_{2e}$ et est reçu par le terminal 16. La fréquence $F_{2e}$ peut être décalée par rapport à $F_{1r}$ d'une quantité $F_{sa}$ égale à la fréquence d'un premier oscillateur local embarqué dans le satellite et travaillant sur le signal aller.

Le terminal émet un signal retour montant 24, à une fréquence $F_{3e}$ qui peut être proportionnelle à la fréquence $F_{2r}$ reçue dans le terminal ($F_{3e}=KF_{2r}$). Le satellite réémet un signal retour descendant 26 à une fréquence $F_{4e}$ décalée par rapport à $F_{3r}$ d'une quantité $F_{sr}$ égale à la fréquence d'un second oscillateur local embarqué dans le satellite et travaillant sur le signal retour.

Avant de décrire en détail le procédé mis en oeuvre dans une telle installation selon l'invention, il est utile de préciser les notations qui vont être utilisées.

Notations

Pe = Signal émis par la station

Pr = Signal reçu par le terminal,

Se = Composante "tons" de Pe,

Sr = Composante "tons" de Pr,

Sens aller = sens station vers terminal,

Sens retour = sens terminal vers station,

$t_0$ : temps de référence propre à la station,

$t_1$ : instant d'émission du signal aller,

$t_2$ : instant de mesure dans le terminal,

$t_3$ : instant d'émission du signal retour par le terminal,

$t_4$ : instant de réception par la station du signal retour,

$\delta t$ = retard dans le terminal,

$D_{jk}$ = distance station-satellite si j=1 ou satellite-terminal si j=2, lorsque le signal est dans le sens aller si k=a ou dans le sens retour si k=r ; on a donc quatre distances à considérer : $D_{1a}$, $D_{2a}$, $D_{1r}$, $D_{2r}$;

$t_{sa}$ = temps de transit du signal aller dans le satellite sur le parcours aller,

$t_{sr}$ = temps de transit du signal retour dans le satellite sur le parcours retour,

$f_i$ = fréquence du ton de rang i,

$mt_i$ = mesure effectuée par le terminal sur le ton i, c'est-à-dire phase φi du ton i,

ms = écart de temps mesuré par la station entre l'instant de réception t4 et le temps de référence to.

S = position de la station,

M = position du mobile,

Ta = position du satellite à l'aller,

Tr = position du satellite au retour,

Va = vecteur vitesse du satellite à l'aller,

Vr = vecteur vitesse du satellite au retour,

$F_{1e}$ = fréquence aller montante émise par la station,

$F_{1r}$ = fréquence aller montante reçue par le satellite,

$F_{2e}$ = fréquence aller descendante émise par le satellite,

$F_{2r}$ = fréquence aller descendante reçue par le terminal,

$F_{3e}$ = fréquence retour montante émise par le terminal, $F_{3r}$ = fréquence retour montante reçue par le satellite, $F_{4e}$ = fréquence retour descendante émise par le satellite,

$F_{4r}$ = fréquence retour descendante reçue par la station,

$F_{sa}$ : fréquence de l'oscillateur local ou de transposition du satellite dans le sens aller,

$F_{sr}$ = fréquence de l'oscillateur local ou de transposition du satellite dans le sens retour,

c = vitesse de la lumière.

**Remarques :** les temps sont notés $t_i$ s'ils sont référencés par la station et $\hat{t}_i$ s'ils sont référencés par le terminal.

On note

$$D_{1a}= \left|\vec{STa}(t_1)\right|, \; D_{2a}= \left|\vec{MTa}(t_2)\right|$$

$$D_{2r} = \left|\vec{MTr}(t_3)\right|, \; D_{1r}= \left|\vec{STr}(t_4)\right|$$

Ces notations sont utilisées sur la figure 2, qui représente un diagramme temporel où sont marqués les instants to de référence, $t_1$ d'émission du signal aller, $t_2$ de réception du signal aller dans le terminal, $t_3$ d'émission du signal retour par le terminal, $t_4$ de réception du signal retour dans la station. Sur la figure 2 apparaissent également les distances $D_{1a}$ et $D_{1r}$, séparant la station du satellite aux instants $t_1$ et $t_4$ et les distances $D_{2a}$ et $D_{2r}$ séparant le mobile du satellite aux instants $t_2$ et $t_3$.

Le principe de la mesure réalisée selon l'invention repose sur une première équation dite "équation aller", fondée sur la mesure des phases des tons et sur une seconde équation dite "équation retour", fondée sur la datation du signal retour dans la station, datation qui est rendue possible par l'utilisaton du code d'étalement.

Ces deux équations vont donc d'abord être établies.

**Equation aller** :

Le signal Pr reçu par le terminal en t2 dépend du signal Pe émis par la station et de l'écart $\hat{t}_2 - \hat{t}_0$, lequel dépend du temps $\frac{D_{1a}}{c}$ mis par le signal à atteindre le satellite, du temps $\frac{D_{2a}}{c}$ mis par le signal pour atteindre le mobile à partir du satellite et du temps de transit $t_{sa}$ dans le satellite. On a :

$$P_r\left(\hat{t}_2 - \hat{t}_0\right) = P_e\left(\hat{t}_2 - \frac{D_{1a}}{c} - t_{sa} - \frac{D_{2a}}{c\,.} - \hat{t}_0\right)$$

De même pour les Sr, le signal Sr qui est la composante ton(s) de Pr, on a :

$$S_r\left(\hat{t}_2 - \hat{t}_0\right) = S_e\left(\hat{t}_2 - \frac{D_{1a}}{c} - t_{sa} - \frac{D_{2a}}{c} - \hat{t}_0\right)$$

Pour chaque ton i le terminal mesure donc une phase $mt_i$ qui est donnée par :

$$mt_i = 2\pi f i\left(\hat{t}_2 - \hat{t}_0 - \frac{D_{1a}}{c} - t_{sa} - \frac{D_{2a}}{C} - \hat{t}_0\right)$$

à $2N_i\pi$ près
où $N_i$ est un entier. Cette équation est l'équation aller donnant la phase des tons reçus par le mobile.

**Equation retour** :

Le terminal émet le résultat de sa mesure vers la station et cela à l'instant $t_3$. La station date la réception du signal retour à l'instant $t_4$. La somme de la distance $D_{2r}$ séparant le mobile du satellite au moment de l'émission ($t_3$) et de la distance $D_{1r}$ séparant le satellite de la station à l'instant de réception $t_4$ est :

$$D_{2r} + D_{1r} = c\left(t_4 - t_3\right) - ct_{sr}$$

soit, avec $t_3 = t_2 + \delta t$

$$D_{2r} + D_{1r} = c(t_4 - t_0) - c(t_2 - t_0) - c\delta t - ct_{sr}$$

En notant ms l'écart de temps mesuré par la station entre les instants de réception $t_4$ et le temps de référence $t_0$, on a :

$$D_{2r} + D_{1r} = cms - c(t_2 - t_0) - c\delta t - ct_{sr}$$

C'est l'équation retour.
A partir des équations aller et retour et de l'égalité $\hat{t}_2 - \hat{t}_0 = t_2 - t_0$, on peut obtenir aisément la somme des distances séparant le mobile du satellite aux instants d'émission du signal retour et de réception du signal aller, soit respectivement $D_{2r}$ et $D_{2a}$. On a :

$$D_{2r}+D_{2a}=-(D_{1r}+D_{1a})+cms-\,c\frac{mt_i}{2\pi f_i}-c\frac{N_i}{f_i}\,-c\delta t-cT_s$$

où $T_s$ représente la somme des temps de transit dans le satellite, à l'aller et au retour ($t_{sa}+t_{sr}$).

Cette équation permet de connaître, pour chaque déphasage $mt_i$, la somme $D_{2r}+D_{2a}$ avec une ambiguïté due aux facteurs $c\frac{N_i}{f_i}$.

Pour lever cette ambiguïté, on peut utiliser deux tons M et m émis simultanément dont les fréquences $f_M$ et $f_m$ sont dans le rapport a/b où a et b sont des entiers. On a $f_M = \frac{a}{b}f_m$. La mesure des phases de ces deux tons permet de réduire l'ambiguïté sur $D_{2r}+D_{2a}$ au plus petit commun multiple (PPCM) de $\frac{c}{f_M}$ et $\frac{c}{f_m}$ soit $b\frac{c}{f_m}$.

On peut aussi utiliser une structure tramée pour la voie aller et lever l'ambiguïté avec une détection de l'instant de mesure dans cette trame, la précision exigée pour cette datation ne servant qu'à cette ambiguité, la mesure fine étant effectuée à l'aid edu'n ton. On indique le symbole ou le bit de cette trame où l'on a effectué la mesure de phase sur le ton pour supprimer l'ambiguïté. L'instant to est alors le début de la trame aller.

Le procédé de détermination des distances qui vient d'être décrit peut se compléter avantageusement par des mesures de changement de ces distances avec le temps, autrement dit une mesure des vitesses. Ces mesures sont liées aux glissements de fréquence des signaux émis et reçus par le jeu de l'effet DOPPLER.

Les mesures d'effet. DOPPLER sont effectuées en station à la réception des salves émises par les terminaux lorsque le satellite est à la position Tr marquée sur la figure 2.

L'analyse des signaux affectés des différents effets DOPPLER donne les équations suivantes.

Dans la liaison aller, les trois fréquences impliquées $F_{1r}$, $F_{2e}$, $F_{2r}$ sont définies par :

$$\begin{cases} F_{1r} = F_{1e}\left(1 - \dfrac{S\vec{T}_a * \vec{V}_a}{D_{1a}.c}\right) \\[3mm] F_{2e} = F_{1r} + F_{sa} \\[3mm] F_{2r} = F_{2e}\cdot\left(1 - \dfrac{M\vec{T}_a * \vec{V}_a}{D_{2_a}.c}\right) \end{cases}$$

Ces trois relations donnent la fréquence $F_{2r}$ du signal reçu par le terminal :

$$F_{2r} = \left\{ F_{1e}\left(1 - \frac{S\vec{T}_a * \vec{V}_a}{D_{1_a}.c}\right) + F_{sa}\right\}\left(1 - \frac{M\vec{T}_a * \vec{V}_a}{D_{2_a}.c}\right)$$

Dans la liaison retour, les trois fréquences impliquées $F_{3r}$, $F_{4e}$, $F_{4r}$ sont définies par :

$$\begin{cases} F_{3r} = F_{3e}\left(1 - \dfrac{\vec{MT}_r * \vec{V}_r}{D_{2r}.c}\right) \\[2em] F_{4e} = F_{3r} + F_{sr} \\[2em] F_{4r} = F_{4e}\left(1 - \dfrac{\vec{ST}_r * \vec{V}_r}{D_{1r}.c}\right) \end{cases}$$

Ces trois relations donnent la fréquence retour descendante recue oar la station :

$$F_{4r} = \left\{ F_{3e}\left(1 - \dfrac{\vec{MT}_r * \vec{V}_r}{D_{2r}.c}\right) + F_{sr}\right\}\left(1 - \dfrac{\vec{ST}_r * \vec{V}_r}{D_{1r}.c}\right)$$

En imposant que la fréquence $F_{3e}$ de la porteuse émise par le terminal soit, en général, égale à K fois la fréquence aller descendante reçue $F_{2r}$, soit $KF_{2r}$ et en notant $\dot{r}_{rm}$ la quantité $\dfrac{\vec{MT}_r * \vec{Vr}}{D_{2r}}$ et $\dot{r}_{rs}$ la quantité $\dfrac{\vec{MT}_r * \vec{Vr}}{D_{1r}}$ on peut écrire :

$$\dot{r}_{as} = \dfrac{\vec{ST}a * Va}{Dra}$$

$$\dot{r}am = \dfrac{\vec{MT}a * Va}{D2a}$$

$$F_{4r} = K.F_{re}\cdot\left(1 - \dfrac{\dot{r}_{am}}{c}\right)\left(1 - \dfrac{\dot{r}_{rm}}{c}\right)\left(1 - \dfrac{\dot{r}_{rs}}{c}\right)\left(1 - \dfrac{\dot{r}_{as}}{c}\right)$$

$$+ \ K. \ Fsa \ (1 - \dfrac{\dot{r}_{am}}{c})(1 - \dfrac{\dot{r}_{rm}}{c})(1 - \dfrac{\dot{r}_{rs}}{c})$$

$$+ \ Fsr \ 1 \ - \ (\dfrac{\dot{r}_{rs}}{c})$$

L'orbitographie permet de connaître Ta, Tr, $\vec{V}a$, $\vec{V}r$ donc une relation liant $r_{as}$ et $r_{rs}$ d'où:

$$F_{4r} = K.F_{1e} \cdot \left(1 - \frac{\dot{r}_m}{c}\right)^2 \left(1 - \frac{\dot{r}_{rs}}{c}\right)^2 + KF_{sa} \cdot \left(1 - \frac{\dot{r}_{rm}}{c}\right)^2 \left(1 - \frac{\dot{r}_{rs}}{c}\right)^2 + F_{sr}\left(1 - \frac{\dot{r}_{rs}}{c}\right)$$

La quantité $\dot{r}_{rm}/c$ peut donc être calculée à partir de toutes les autres quantités :

$$\frac{\dot{r}_{rm}}{c} = f\left(F_{4r}, F_{1e}, F_{sa}, F_{sr}, K, \frac{\dot{r}_{rs}}{c}\right)$$

La station mesure la fréquence $E_{4r}$, qui est la fréquence du signal retour qu'elle reçoit. Par ailleurs, les distances station-satellite ($D_{1a}$, $D_{1r}$) et la vitesse relative station-satellite Va sont connues par la connaissance de l'orbite du satellite. Cette connaissance peut résulter d'un procédé d'orbitographie mis en oeuvre dans la station par des opérations classiques mettant en oeuvre une porteuse modulée par des tons comme décrit par exemple dans le document "Ranging Standard" cité plus haut.

## Revendications

1. Procédé de localisation de mobiles, dans lequel on établit une liaison radioélectrique aller-retour entre une station au sol et un mobile à localiser équipé d'un terminal, à travers un satellite artificiel, et on localise le mobile à partir des caractéristiques comparées des signaux radioélectriques de la liaison aller-retour,

   ce procédé étant caractérisé par le fait qu'on utilise un seul satellite et qu'il comprend les opérations suivantes :

   A) dans la liaison aller :

   - depuis la station au sol (10), on émet, à un instant ($t_1$) compté par rapport à un instant de référence ($t_0$) propre à la station, un signal aller (20) constitué par une porteuse ayant une fréquence déterminée ($F_1$) modulée par deux signaux sinusoïdaux appelés "tons", chaque ton ayant une fréquence déterminée $f_M$ et $f_m$ reliées par $f_M = \frac{a}{b}f_m$ où a et b sont des entiers, chaque ton ayant une phase, les phases instantanées des deux tons étant nulles à l'instant de référence ($t_0$) propre à la station,
   - on reçoit le signal aller (20) dans le satellite (12) et l'on réémet un signal aller (22) avec un certain retard lié au temps de transit ($t_{sa}$) dans le satellite (12),
   - on reçoit le signal aller (22) réémis par le satellite (12) dans le terminal (16) du mobile (14) à localiser et on mesure la phase ($mt_i$) des deux tons reçus à un instant particulier ($t_2$),

   B) dans la liaison retour :

   - on forme un signal retour dans le terminal (16) du mobile (14) en modulant une porteuse ayant une certaine fréquence ($F_3$) par l'information correspondant aux résultats de la mesure de phase des deux tons ($mt_i$), on effectue une opération d'étalement de spectre de cette porteuse modulée par un code d'étalement lié à un instant particulier ($t_3$) décalé de l'instant de mesure ($t_2$) d'une quantité ($\delta t$) connue,
   - on émet, depuis le terminal (16) du mobile (14), un signal retour (24) à spectre étalé à cet instant particulier ($t_3$),
   - on reçoit ce signal retour (24) dans le satellite (12) et on réémet un signal retour (26) avec un certain retard lié au temps de transit ($t_{sr}$) dans le satellite,
   - on reçoit dans la station (10) le signal retour (26) réémis par le satellite (12), on désétale le spectre du signal reçu puis on démodule ce signal pour restituer l'information relative à la mesure ($mt_i$) de différence de phase,
   - on date l'instant de réception ($t_4$) de ces mesures ($mt_i$) par intercorrélation entre le code d'étalement reçu et un code identique attendu,

- à partir des mesures de phases ($mt_i$) de l'instant de réception des mesures ($t_4$), du décalage entre l'instant de mesure et l'instant d'émission par le terminal, des temps de transit dans le satellite ($\delta t$, $t_{sr}$, $t_{sa}$), de la distance ($D_{1r}$) station-satellite à l'instant de réception ($t_4$), de la distance ($D_{1a}$) station-satellite à l'instant d'émission ($t_1$) et des fréquences $F_M$ et $f_m$, on déduit la somme des distances des trajets aller et retour ($D_{2a}+D_{2r}$) entre le satellite et le mobile.

2. Procédé de localisation de mobiles, dans lequel on établit une liaison radioélectrique aller-retour entre une station au sol et un mobile à localiser équipé d'un terminal, à travers un satellite artificiel, et on localise le mobile à partir des caractéristiques comparées des signaux radioélectriques de la liaison aller-retour,

ce procédé étant caractérisé par le fait qu'on utilise un seul satellite et qu'il comprend les opérations suivantes :

A) dans la liaison aller :

- depuis la station au sol (10), on émet, à un instant ($t_1$) compté par rapport à un instant de référence ($t_0$) propre à la station, un signal aller (20) constitué par une porteuse ayant une fréquence déterminée ($F_1$) modulée par un signal sinusoïdal appelé "ton", cette liaison aller comprenant une structure tramée de symboles ou de bits, ledit ton ayant une fréquence déterminée ($f_M$) multiple du rythme symbole ou bit de la structure tramée et une phase, la phase instantanée du ton étant nulle à l'instant de référence ($t_0$) propre à la station, cet instant ($t_0$) étant pris au début de la trame,
- on reçoit le signal aller (20) dans le satellite (12) et l'on réémet un signal aller (22) avec un certain retard lié au temps de transit ($t_{sa}$) dans le satellite (12),
- on reçoit le signal aller (22) réémis par le satellite (12) dans le terminal (16) du mobile (14) à localiser et on mesure la phase ($mt_i$) du ou des ton(s) reçus à un instant particulier ($t_2$),

B) dans la liaison retour :

- on forme un signal retour dans le terminal (16) du mobile (14) en modulant une porteuse ayant une certaine fréquence ($F_3$) par l'information correspondant aux résultats de la mesure de phase du ou des ton(s) ($mt_i$), on effectue une opération d'étalement de spectre de cette porteuse modulée par un code d'étalement lié à un instant particulier ($t_3$) décalé de l'instant de mesure ($t_2$) d'une quantité ($\delta t$) connue,
- on émet, depuis le terminal (16) du mobile (14), un signal retour (24) à spectre étalé à cet instant particulier ($t_3$),
- on reçoit ce signal retour (24) dans le satellite (12) et on réémet un signal retour (26) avec un certain retard lié au temps de transit ($t_{sr}$) dans le satellite,
- on reçoit dans la station (10) le signal retour (26) réémis par le satellite (12), on désétale le spectre du signal reçu puis on démodule ce signal pour restituer l'information relative à la mesure ($mt_i$) de différence de phase,
- on date l'instant de réception ($t_4$) de ces mesures ($mt_i$) par intercorrélation entre le code d'étalement reçu et un code identique attendu,
- à partir des mesures de phases ($mt_i$) de l'instant de réception des mesures ($t_4$), du décalage entre l'instant de mesure d'émission et l'instant par le terminal, des temps de transit dans le satellite ($\delta t$, $t_{sr}$, $t_{sa}$), de la distance ($D_{1r}$) station-satellite à l'instant de réception ($t_4$), de la distance ($D_{1a}$) station-satellite à l'instant d'émission ($t_1$), on déduit la somme des distances des trajets aller et retour ($D_{2a}+D_{2r}$) entre le satellite et le mobile.

3. Procédé selon l'une quelconque des revendications 1 ou 2, caractérisé par le fait que l'on mesure en outre les décalages de fréquence entre les signaux émis et les signaux reçus, pour évaluer les effets DOPPLER, ce qui permet de mesurer la vitesse de déplacement du mobile.

**Claims**

1. Method for locating moving objects, in which a forward-backward radio link is established between a ground station and a moving object to be located equipped with a terminal, through an artificial satellite, and the moving object is located on the basis of compared characteristics of radio signals of the forward-backward link, said method being characterized in that it comprises the following operations:

A) in the forward link:

- from the ground station (10), transmission takes place at an instant ($t_1$) counted with respect to a reference instant ($t_0$) individual to the station, an outward signal (20) constituted by a carrier having a given frequency ($F_1$) modulated by two sinusoidal signals called tones, each tone having a given frequency $f_M$ and $f_m$ linked by $f_M = \frac{a}{b}f_m$, where a and b are integers, each tone having a phase, the instantaneous phases of the two tones being zero at the reference instant ($t_0$) individual to the station,
- the outward signal (20) is received in the satellite (12) and retransmission takes place of an outward signal (22) with a certain time delay linked with the transit time ($t_{sa}$) in the satellite (12),
- the outward signal (22) retransmitted by the satellite (12) is received in the terminal (16) of the moving object (14) to be located and the phase ($mt_i$) of the two tones received is measured at a particular instant ($t_2$),

B) in the backward link:

- a return signal is formed in the terminal (16) of the moving object (14) by modulating a carrier having a certain frequency ($F_3$) by information corresponding to the results of the phase measurement of the two tones ($mt_i$) and a spectrum spreading operation for said modulated carrier is carried out by a spreading code linked with a particular instant ($t_3$) displaced from the measuring instant ($t_2$) by a known quantity ($\delta t$),
- from the terminal (16) of the moving object (14) is transmitted a spread spectrum return signal (24) at said particular instant ($t_3$),
- said return signal (24) is received in the satellite (12) and a return signal (26) is retransmitted with a certain time delay linked with the transit time ($t_{sr}$) in the satellite,
- in the station (10) is received the return signal (26) retransmitted by the satellite (12), the spectrum of the signal received is despread and then this signal is demodulated to restore the information relative to the measurement ($mt_i$) of the phase difference,
- the reception instant ($t_4$) of these measurements ($mt_i$) is dated by intercorrelation between the spreading code received and an identical, expected code,
- on the basis of the phase measurement ($mt_i$) of the reception instant of the measurements ($t_4$), the displacement between the measurement instant and transmission instant, by the terminal of the transmit times in the satellite ($\delta t$, $t_{sr}$, $t_{sa}$), the station-satellite distance ($D_{1r}$) at the reception instant ($t_4$), the station-satellite distance ($D_{1a}$) at the transmission instant ($t_1$) and the frequencies FM and fm, the sum of the distances of the outward and return paths ($D_{2a} + D_{2r}$) between the satellite and the moving object is deduced.

2. Method for locating moving objects, in which a forward-backward radio link is established between a ground station and a moving object to be located equipped with a terminal, through an artificial satellite, and the moving object is located on the basis of compared characteristics of radio signals of the forward-backward link, said method being characterized in that it comprises the following operations:

A) in the forward link:

- from the ground station (10), transmission takes place at an instant ($t_1$) counted with respect to the reference instant ($t_0$) individual to the station, and an outward signal (20) constituted by a carrier having a given frequency ($F_1$) modulated by a sinusoidal signal called a tone, said forward link comprising a framed structure of symbols or bits, said tone having a given frequency ($F_M$) which is a multiple of the symbol rhythm or bit of the framed structure and a phase, the instantaneous phase of the tone being zero at the reference time ($t_0$) individual to the station, said instant ($t_0$) being taken at the start of the frame,
- the outward signal (20) is received in the satellite (12) and an outward signal (22) is retransmitted with a certain time delay linked with the transmit time ($t_{sa}$) in the satellite (12),
- the outward signal (22) retransmitted by the satellite (12) is received in the terminal (16) of the moving object (14) to be located and measurement takes place of the phase ($mt_i$) of the tone or tones received at a particular instant (t2),

B) in the backward link:

- a return signal is formed in the terminal (16) of the moving object (14) by modulating a carrier having a certain frequency ($F_3$) by the information corresponding to the results of the phase measurement of the tone or tones ($mt_i$), a spectrum spreading operation is carried out on said carrier modulated by a spreading code linked with a particular instant (t3) displaced from the measuring instant ($t_2$) by a known quantity ($\delta t$),

- from the terminal (16) of the moving object (14) is transmitted a spread spectrum return signal (24) at said particular instant ($t_3$),
- said return signal (24) is received in the satellite (12) and a return signal (26) is retransmitted with a certain time delay linked with the transit time ($t_{sr}$) in the satellite,
- in the station (10) is received the return signal (26) retransmitted by the satellite (12), the spectrum of the signal received is despread and then said signal is demodulated to restore the information relative to the phase difference measurement ($mt_i$),
- the reception instant ($t_4$) of said measurements ($mt_i$) is dated by intercorrelation between the spreading code received and an expected identical code,
- on the basis of the phase measurements ($mt_i$) of the reception instant of the measurements ($t_4$), the time delay between the transmission measuring instant and the instant by the terminal, transmit times in the satellite ($\delta t$, $t_{sr}$, $t_{sa}$), the distance ($D_{1r}$) between the station and the satellite at the reception instant ($t_r$), the distance ($D_{1a}$) between the station and the satellite at the transmission instant ($t_i$), deduction takes place of the distances of the outward and return paths ($D_{2a} + D_{2r}$) between the satellite and the moving object.

**3.** Method according to either of the claims 1 and 2, characterized in that measurement also takes place of the frequency shifts between the transmitted signals and the received signal in order to evaluate the DOPPLER effects, which makes it possible to measure the speed of movement of the moving object.

**Patentansprüche**

**1.** Verfahren zur Ortung von Mobilstationen bzw. Fahrzeugen, bei dem man eine radioelektrische Hin- und Rückverbindung zwischen einer Bodenstation und einem zu ortenden, mit einem Terminal ausgerüsteten Fahrzeug über einen künstlichen Satelliten herstellt und man das Fahrzeug aufgrund der verglichenen Charakteristika der radioelektrischen Signale der Hin- und Rückverbindung ortet, wobei dieses Verfahren
**dadurch gekennzeichnet** ist, dass man einen einzigen Satelliten benutzt und dass es die folgenden Operationen umfasst:

A) bei der Hin-Verbindung:

- sendet man von der Bodenstation (10) zu einem Zeitpunkt ($t_1$), berechnet in Bezug auf einen für die Station charakteristischen Referenzzeitpunkt ($t_0$), ein Hin-Signal (20) aus, gebildet durch eine Trägerwelle mit einer bestimmten Frequenz ($F_1$), moduliert durch zwei sinusförmige Signale, "Töne" genannt, wobei jeder Ton eine festgelegte Frequenz $f_M$ bzw. $f_m$ hat, verbunden durch $f_M = \frac{a}{b}f_m$ mit a und b als ganzen Zahlen, jeder Ton eine Phase hat und die momentanen Phasen der beiden Töne zum Referenzzeitpunkt ($t_0$) charakteristisch sind für die Station,
- empfängt man im Satelliten (12) das Hin-Signal (20) und sendet mit einer gewissen Verzögerung, verbunden mit der Transitzeit ($t_{sa}$) im Satelliten (12), wieder ein Hin-Signal (22) aus,
- empfängt man im Terminal (16) des zu ortenden Fahrzeugs (14) das durch den Satelliten (12) wieder ausgesendete Hin-Signal (22), wobei man die Phase ($mt_i$) der beiden empfangenen Töne zu einem bestimmten Zeitpunkt ($t_2$) misst,

B) bei der Rückverbindung:

- bildet man in dem Terminal (16) des Fahrzeugs (14) ein Signal, indem man eine Trägerwelle mit einer bestimmten Frequenz ($F_3$) durch die Information moduliert, die den Resultaten der Phasenmessung der beiden Töne ($mt_i$) entspricht, realisiert man eine Spektrumspreizoperation dieser modulierten Trägerwelle durch einen mit einem speziellen Zeitpunkt ($t_3$) verknüpften Spreizcode, der bezüglich des Messzeitpunkts ($t_2$) um eine bekannte Größe ($\delta t$) versetzt bzw. verschoben ist,
- sendet man vom Terminal (16) des Fahrzeugs (14) zu diesem speziellen Zeitpunkt ($t_3$) ein Spreizspektrum-Rücksignal (24) aus,
- empfängt man in dem Satelliten (12) dieses Rücksignal (24) und sendet wieder ein Rücksignal (26) mit einer gewissen, mit der Transitzeit ($t_{sr}$) im Satelliten verbundenen Verzögerung aus,
- empfängt man in der Bodenstation (10) das durch den Satelliten (12) wieder ausgesendete Rücksignal (26), entspreizt das Spektrum des empfangenen Signals und demoduliert dann dieses Signal, um die die Messung ($mt_i$) der Phasendifferenz betreffende Information wiederzugeben,

- datiert man den Empfangszeitpunkt ($t_4$) dieser Messungen ($mt_i$) mittels Interkorrelation zwischen dem empfangenen Spreizcode und einem erwarteten identischen Code,
- von den Phasenmessungen ($mt_i$) des Empfangszeitpunkts der Messungen ($t_4$), der Verschiebung zwischen dem Zeitpunkt der Messung und dem Zeitpunkt der Sendung durch das Terminal, den Transitzeiten im Satelliten ($\delta t$, $t_{sr}$, $t_{sa}$), der Distanz ($D_{1r}$) Fahrzeug-Satellit zum Zeitpunkt des Empfangs ($t_4$), der Distanz ($D_{1a}$) Fahrzeug-Satellit zum Zeitpunkt der Sendung ($t_1$) und den Frequenzen $F_M$ und $f_m$ leitet man die Summe der Distanzen der Hin- und Rückstrecken ($D_{2a}+D_{2r}$) zwischen dem Satelliten und dem Fahrzeug ab.

2. Verfahren zur Ortung von Fahrzeugen, bei dem man eine radioelektrische Hin- und Rückverbindung zwischen einer Bodenstation und einem zu ortenden, mit einem Terminal ausgerüsteten Fahrzeug über einen künstlichen Satelliten herstellt und man das Fahrzeug aufgrund der verglichenen Charakteristika der radioelektrischen Signale der Hin- und Rückverbindung ortet, wobei dieses Verfahren
**dadurch gekennzeichnet** ist, dass man einen einzigen Satelliten benutzt und dass es die folgenden Operationen umfasst:

   A) bei der Hin-Verbindung:

- sendet man von der Bodenstation (10) zu einem Zeitpunkt ($t_1$), berechnet in Bezug auf einen für die Station charakteristischen Referenzzeitpunkt ($t_0$), ein Hin-Signal (20) aus, gebildet durch eine Trägerwelle mit einer bestimmten Frequenz ($F_1$), moduliert durch ein sinusförmiges Signal, "Ton" genannt, wobei diese Hin-Verbindung eine Datenübertragungsblock-Struktur aus Symbolen oder Bits umfasst und der genannte Ton eine festgelegte, vielfache Frequenz ($f_M$) des Symbol- oder Bit-Takts der Datenübertragungsblock-Struktur hat, und die Momentanphase des Tons zu dem für die Station charakteristischen Referenzzeitpunkt ($t_0$) null ist, wobei dieser Zeitpunkt ($t_0$) zu Beginn des Datenübertragungsblocks genommen wird,
- empfängt man im Satelliten (12) das Hin-Signal (20) und sendet mit einer gewissen Verzögerung, verbunden mit der Transitzeit ($t_{sa}$) im Satelliten (12), wieder ein Hin-Signal (22) aus,
- empfängt man im Terminal (16) des zu ortenden Fahrzeugs (14) das durch den Satelliten (12) wieder ausgesendete Hin-Signal (22), wobei man die Phase ($mt_i$) des empfangenen Tons oder der empfangenen Töne zu einem bestimmten Zeitpunkt ($t_2$) misst,

   B) bei der Rückverbindung:

- bildet man in dem Terminal (16) des Fahrzeugs (14) ein Signal, indem man eine Trägerwelle mit einer bestimmten Frequenz ($F_3$) durch die Information moduliert, die den Resultaten der Phasenmessung des Tons oder der Töne ($mt_i$) entspricht, realisiert man eine Spektrumspreizoperation dieser modulierten Trägerwelle durch einen mit einem speziellen Zeitpunkt ($t_3$) verknüpften Spreizcode, der bezüglich des Messzeitpunkt ($t_2$) um eine bekannte Größe ($\delta t$) versetzt bzw. verschoben ist,
- sendet man vom Terminal (16) des Fahrzeugs (14) zu diesem speziellen Zeitpunkt ($t_3$) ein Spreizspektrum-Rücksignal (24) aus,
- empfängt man in dem Satelliten (12) dieses Rücksignal (24) und sendet wieder ein Rücksignal (26) mit einer gewissen, mit der Transitzeit ($t_{sr}$) im Satelliten verbundenen Verzögerung aus,
- empfängt man in der Bodenstation (10) das durch den Satelliten (12) wieder ausgesendete Rücksignal (26), entspreizt das Spektrum des empfangenen Signals und demoduliert dann dieses Signal, um die die Messung ($mt_i$) der Phasendifferenz betreffende Information wiederzugeben,
- datiert man den Empfangszeitpunkt ($t_4$) dieser Messungen ($mt_i$) mittels Interkorrelation zwischen dem empfangenen Spreizcode und einem erwarteten identischen Code,
- von den Phasenmessungen ($mt_i$) des Empfangszeitpunkts der Messungen ($t_4$), der Verschiebung zwischen dem Zeitpunkt der Messung und dem Zeitpunkt der Sendung durch das Terminal, den Transitzeiten im Satelliten ($\delta t$, $t_{sr}$, $t_{sa}$), der Distanz ($D_{1r}$) Fahrzeug-Satellit zum Zeitpunkt des Empfangs ($t_4$) und der Distanz ($D_{1a}$) Fahrzeug-Satellit zum Zeitpunkt der Sendung ($t_1$) leitet man die Summe der Distanzen der Hin- und Rückstrecken ($D_{2a}+D_{2r}$) zwischen dem Satelliten und dem Fahrzeug ab.

3. Verfahren nach einem der Ansprüche 1 und 2, dadurch gekennzeichnet, dass man außerdem die Frequenzverschiebungen zwischen den gesendeten Signalen und den empfangenen Signalen misst, um die Dopplereffekte auszuwerten, was ermöglicht, die Fortbewegungsgeschwindigkeit des Fahrzeugs zu messen.

FIG. 1

FIG. 2